# EUROPEAN PATENT APPLICATION

(11) **EP 3 901 676 A1**
(43) Date of publication of application: **27.10.2021**
(21) Application number: 19897734.0
(22) Date of filing: 25.11.2019
(51) Int. Cl.: G02B 6/42, H05K 7/20

(54) **OPTICAL MODULE COMMUNICATION ASSEMBLY**

(30) Priority: 18.12.2018 CN 201811553890
(71) Applicant: ZTE Corporation, Shenzhen, Guangdong 518057 (CN)
(72) Inventor: YANG, Liping, Shenzhen, Guangdong 518057 (CN); LUO, Jun, Shenzhen, Guangdong 518057 (CN); QIU, Linghong, Shenzhen, Guangdong 518057 (CN)
(74) Representative: Canzler & Bergmeier Patentanwälte Partnerschaft mbB
(86) International application number: PCT/CN2019/120544
(87) International publication number: WO 2020/125330

(57) **Abstract**

Provided is an optical module communication assembly, comprising a circuit board (1), wherein optical modules (2, 4) are respectively arranged on two opposite faces of the circuit board (1), and each of the optical modules (2, 4) is provided with a first heat dissipation component (3, 5). By simultaneously arranging the optical modules (2, 4) at the two opposite faces of the circuit board (1), the arrangement density of the optical modules is improved, and by arranging a first heat dissipation component (3, 5) on each of the optical modules (2, 4), the effective heat dissipation space can be improved, thereby solving the problem of poor heat dissipation due to the high density of the arrangement of the optical modules, and the heat dissipation effect is improved.

## Description

### TECHNICAL FIELD

The present disclosure relates to the field of communication technology, in particular to an optical module communication assembly.

### BACKGROUND

In the field of communications, with the increase of service requirements of products and the improvement of system integration of hardware, a greater number of optical modules need to be arranged on a single board, so that it is desired to further increase the port density of single board and reduce the cost of ports for improving product competitiveness. However, the increase of the number of the optical modules in a slot space of the single board leads to over-high power density of the optical modules, resulting in a difficulty of cascade air-cooling heat dissipation for the optical modules. Based on the measures such as reducing the device size and power of the optical modules and introducing new heat dissipation techniques, under a condition that the size of the single board is unchanged, it is an important measure to increase the density of the optical modules and an effective heat dissipation space for the optical modules by optimizing the layout of the optical modules on the single board, so as to eliminate the bottleneck of the layout of the optical modules.

### SUMMARY

In order to solve the problem of poor heat dissipation due to a large number of modules in the prior art, embodiments of the present disclosure provide an optical module communication assembly.

In a first aspect, an embodiment of the present disclosure provides an optical module communication assembly including a circuit board, each of two opposite surfaces of the circuit board is provided with an optical module, and each optical module is provided with a first heat dissipation member.

Optionally, each first heat dissipation member is fixed to a corresponding optical module by an elastic connection member.

Optionally, each of the two opposite surfaces of the circuit board includes a first circuit board area and a second circuit board area; a thickness of the circuit board in the first circuit board area is greater than that of the circuit board in the second circuit board area; and all the optical modules are located in the first circuit board area.

Optionally, the first circuit board area of the circuit board is provided therein with a second heat dissipation member in contact connection with the optical modules.

Optionally, the second heat dissipation member includes a soaking plate, which is disposed at a position corresponding to the first circuit board area and is in contact connection with setting areas of the optical modules.

Optionally, the soaking plate is disposed outside an end of the circuit board close to the first circuit board area, is located between the optical modules disposed on the two opposite surfaces of the circuit board, and is in contact connection with the optical modules disposed on the two opposite surfaces of the circuit board.

Optionally, guide rails of the optical modules are connected with the circuit board and the soaking plate by press fit.

Optionally, a heat conducting medium is disposed between two contact connection surfaces of the soaking plate and the optical modules, respectively.

Optionally, a thickness of the second heat dissipation member is smaller than or equal to the thickness of the circuit board in the first circuit board area.

Optionally, the elastic connection member includes an elastic reed.

Optionally, the optical module communication assembly further includes a panel which is disposed along a direction perpendicular to the two opposite surfaces of the circuit board; and the panel is separately connected with a guide rail of each optical module.

Optionally, the optical module communication assembly further includes a communication chip and a control chip; the communication chip is disposed on one of the two opposite surfaces of the circuit board and is located in the second circuit board area; the control chip is disposed on one of the two opposite surfaces of the circuit board and is located in the second circuit board area; and each of the communication chip and the control chip is provided with a third heat dissipation member.

Optionally, a wind resistance balancing plate is disposed in the second circuit board area of the circuit board.

According to the embodiments of the present disclosure, the density of the optical modules can be increased by disposing the optical modules on each of the two opposite surfaces of the circuit board, and the effective heat dissipation space can also be increased by disposing the first heat dissipation member on each of the optical modules, so that a conflict between the density improvement and the heat dissipation space is resolved, thereby improving system access capacity.

The above description is only a summary of the technical solutions of the present disclosure. In order to enable those of ordinary skill in the art to better understand the technical means of the present disclosure so as to implement the technical means according to the content of the description and make the above and other objectives, features and advantages of the present disclosure more apparent, specific implementations of the present disclosure are described below.

### BRIEF DESCRIPTION OF THE DRAWINGS

The additional advantages and benefits will become apparent to those of ordinary skill in the art upon reading the following detailed description of the embodiments. The drawings are only intended to illustrate the embodiments and should not be considered to limit the present disclosure. The same reference numerals are used to indicate the same components throughout the drawings. In the drawings:
Fig. 1 is a schematic structural diagram of an optical module communication assembly according to the present disclosure;
Fig. 2 is a schematic structural diagram of an optical module communication assembly according to the present disclosure; and
Fig. 3 is a schematic structural diagram of an optical module communication assembly according to the present disclosure.

### DETAILED DESCRIPTION

The exemplary embodiments of the present disclosure will be described in detail below with reference to the drawings. Although the drawings show the exemplary embodiments of the present disclosure, it should be understood that the present disclosure may be implemented in various forms and should not be limited to the embodiments illustrated herein. On the contrary, the embodiments are provided to facilitate thorough understanding of the present disclosure and fully convey the scope of the present disclosure to those of ordinary skill in the art.

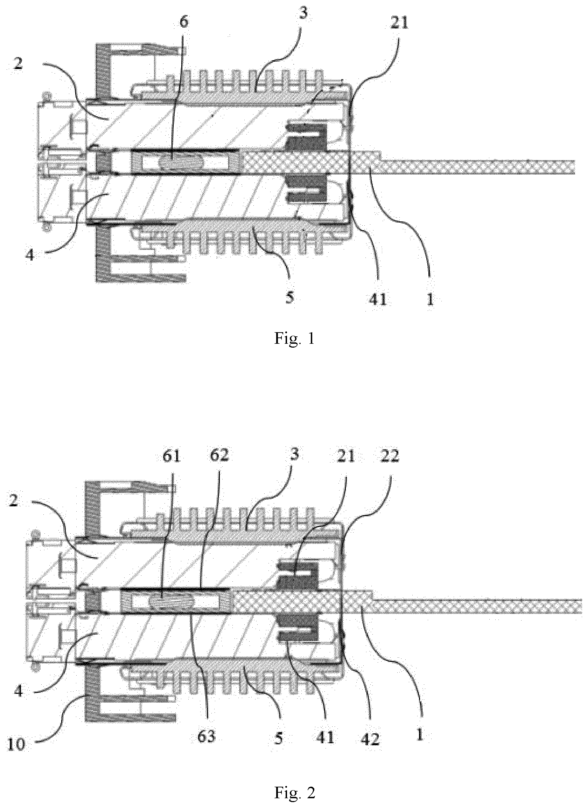

The present disclosure provides an optical module communication assembly, including a circuit board 1. With reference to Fig. 1, the circuit board 1 includes two surfaces that are disposed oppositely, namely a front surface and a back surface, a first optical module 2 and a second optical module 4 are disposed on the front surface and the back surface, respectively, and the first optical module 2 and the second optical module 4 are provided with a first heat dissipation member 3 and a first heat dissipation member 5, respectively.

According to the optical module communication assembly provided by the present disclosure, the arrangement density of the optical modules is improved by disposing the optical modules on both the front surface and the back surface of the circuit board 1. Meanwhile, by disposing the heat dissipation members on the optical modules, the problem of poor heat dissipation due to high arrangement density of the optical modules is solved, thereby improving a heat dissipation effect.

Optionally, each of the first heat dissipation members is fixed to a corresponding optical module by an elastic connection member. Under an elastic action of the elastic connection member, the first heat dissipation member and the optical module can be kept in contact with each other under pressure, so that the connection stability can be improved. Moreover, the first heat dissipation member can absorb heat from the optical module and conduct the heat to finally dissipate the heat, thereby increasing the heat dissipation efficiency. Specifically, the elastic connection member may be an elastic reed, for example. In practical applications, the first heat dissipation member may be fixed to the optical module by using other elastic members.

In practical applications, one or more first optical modules 2 may be disposed on the front surface of the circuit board 1, one or more second optical modules 4 may also be disposed on the back surface of the circuit board 1, and the specific number of the optical modules may be adjusted according to actual needs. In addition, when a plurality of optical modules are disposed on the front surface (or the back surface) of the circuit board 1, the optical modules on the same surface are disposed flat on the surface. For the optical modules on different surfaces, the optical modules may be disposed oppositely or alternately. For example, the first optical module 2 and the second optical module 4 in Fig. 1, which are disposed on the front surface and the back surface of the circuit board 1, respectively, are disposed oppositely.

The present disclosure provides an optical module communication assembly, including the circuit board 1. With reference to Fig. 1 and Fig. 2, each of the two opposite surfaces of the circuit board 1 includes a first circuit board area and a second circuit board area. Optionally, taking the front surface (or the back surface) of the circuit board 1 being in a rectangular shape as an example, the first circuit board area is located at a periphery of the front surface (or the back surface) of the circuit board 1, which is close to one side of the surface, and the remaining area of the front surface or the back surface of the circuit board 1 is the second circuit board area.

In order to meet an installation requirement of the optical modules, a thickness of the circuit board 1 in the first circuit board area is greater than that of the circuit board 1 in the second circuit board area. Both the first optical module 2 and the second optical module 4 are located in the first circuit board area. Optionally, the thickness of the circuit board 1 in the first circuit board area may be 4mm, and can meet the installation requirement of the first optical module 2 and the second optical module 4 which are disposed on the front surface and the back surface of the circuit board 1, respectively.

Moreover, the first circuit board area of the circuit board is further provided therein with a second heat dissipation member 6, which is located between the first optical module 2 and the second optical module 4 and is in contact connection with the first optical module 2 and the second optical module 4. By means of the second heat dissipation member 6, the heat dissipation efficiency can be further increased, thereby improving the heat dissipation effect.

In the present disclosure, a thickness of the second heat dissipation member 6 may be smaller than or equal to the thickness of the circuit board 1 in the first circuit board area. In this way, it can be ensured that the second heat dissipation member 6 does not interfere with the installation of the first optical module 2 and the second optical module 4.

Specifically, as shown in Fig. 2, the second heat dissipation member 6 includes a soaking plate 61, which is disposed outside an end of the circuit board 1 close to the first circuit board area and is located between portions of the first optical module 2 and the second optical module 4 that protrude from the end. Moreover, the soaking plate 61 is in contact connection with setting areas of the first optical module 2 and the second optical module 4. By adopting the soaking plate 61, contact areas of the optical modules can be increased, so that the heat dissipation efficiency can be further increased.

It should be noted that the soaking plate 61 is disposed between the first optical module 2 and the second optical module 4 according to the embodiment, but the present disclosure is not limited thereto. In practical applications, the second heat dissipation member 6 may be disposed at any other position where heat dissipation may be realized.

In the present disclosure, a guide rail 21 of the first optical module 2 is connected with the circuit board 1 and the soaking plate 61 by press fit, and a guide rail 41 of the second optical module 4 is connected with the circuit board 1 and the soaking plate 61 by press fit.

Optionally, a heat conducting medium 62 is disposed between a contact connection surface of the soaking plate 61 and the first optical module 2, and a heat conducting medium 63 is disposed between a contact connection surface of the soaking plate 61 and the second optical module 4.

In the optical module communication assembly provided by the present disclosure, the optical modules are disposed on both the front surface and the back surface of the circuit board 1, which increases the arrangement density of the optical modules; meanwhile, the heat dissipation members are disposed on the optical modules and the soaking plate 61 is sandwiched between the two optical modules disposed on the front surface and the back surface of the circuit board 1, which improves the heat dissipation effect. In addition, the heat dissipation efficiency is increased by disposing the heat conducting media between the soaking plate 61 and the optical modules. The present disclosure solves the problem of poor heat dissipation due to the high arrangement density of the optical modules, so that the optical module communication assembly has a great heat dissipation capacity.

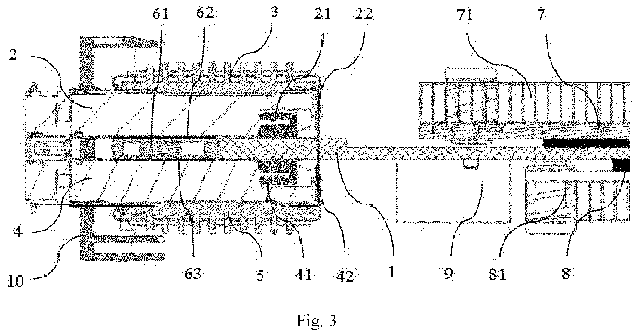

The present disclosure provides an optical module communication assembly, including the circuit board 1. The circuit board 1 includes two surfaces disposed oppositely, namely the front surface and the back surface, and the first optical module 2 and the second optical module 4 are disposed on the front surface and the back surface, respectively. Both of the first optical module 2 and the second optical module 4 are Small Form-Factor Pluggable (SFP) optical modules. With reference to Fig. 3, each of the front surface and the back surface of the circuit board 1 includes the first circuit board area and the second circuit board area; and the soaking plate 61 is disposed outside an end of the circuit board 1 close to the first circuit board area, and the heat conducting medium 62 and the heat conducting medium 63 are disposed on a front surface and a back surface of the soaking plate 61, respectively.

In addition, a bend welded SFP socket 21 is attached to the front surface of the circuit board 1 in the first circuit board area, and a bend welded SFP socket 41 is attached to the back surface of the circuit board 1 in the first circuit board area. Furthermore, both an optical guide rail 22 of the first optical module 2 and an optical guide rail 42 of the second optical module 4 are press-fit SPF optical guide rails, and are connected with the circuit board 1 and the soaking plate 61 by press fit.

The first heat dissipation member 3 is fitted to the optical guide rail 22 of the first optical module 2 with an elastic reed, and the first heat dissipation member 5 is fitted to the optical guide rail 42 of the second optical module 4 with an elastic reed. By means of the elastic reed, the first heat dissipation member can be kept in a compressed and force accumulating state, so that the first heat dissipation member and the optical module can be kept in contact with each other under pressure, thereby improving the connection stability. Moreover, the heat dissipation member can absorb heat from the optical module and conduct the heat to finally dissipate the heat, thereby increasing the heat dissipation efficiency.

In addition, auxiliary heat dissipation surfaces of the first optical module 2 and the second optical module 4 transfer heat to the soaking plate 61 through the optical guide rail 21 of the first optical module 2 and the optical guide rail 41 of the second optical module 4 and the heat conducting medium 62 and the heat conducting medium 63 to dissipate the heat, thereby reducing thermal cascading of the optical modules.

In a specific implementation, the optical module communication assembly further includes a panel 10, which is disposed along a direction perpendicular to the front surface or the back surface of the circuit board 1 and is connected to the optical guide rail 21 of the first optical module 2 and the optical guide rail 41 of the second optical module 4, respectively. Specifically, the panel 10 is overlapped with a reed portion of the optical guide rail 21 of the first optical module 2 and a reed portion of the optical guide rail 41 of the second optical module 4, respectively, so as to ensure a system shielding requirement.

In the present disclosure, the optical module communication assembly further includes a communication chip 7 and a control chip 8. The communication chip 7 is disposed on one of the two opposite surfaces of the circuit board 1 and is located in the second circuit board area; and the control chip 8 is disposed on one of the two opposite surfaces of the circuit board 1 and is located in the second circuit board area. For example, as shown in Fig. 3, the communication chip 7 and the control chip 8 are disposed on the front surface and back surface of the circuit board 1, respectively.

Furthermore, each of the communication chip 7 and the control chip 8 is provided with a third heat dissipation member. Specifically, a heat dissipation device 71 is installed on a front surface of the communication chip 7, and a heat dissipation device 81 is installed on a front surface of the control chip 8. The heat dissipation device 71 and the heat dissipation device 81 are provided to perform heat dissipation for the communication chip 7 and the control chip 8, respectively.

In an specific implementation, a wind resistance balancing plate 9 may be further disposed in the second circuit board area of the circuit board 1 according to a difference between the wind resistance of the devices on the front surface and that on the back surface of the circuit board 1. The difference between the wind resistance of the front surface and that of the back surface of the circuit board 1 is reduced by disposing the wind resistance balancing plate 9.

According to the embodiment of the present disclosure, the density of the optical modules can be increased by disposing the optical modules on each of the two opposite surfaces of the circuit board, and the effective heat dissipation space can also be increased by disposing the first heat dissipation member on each of the optical modules, so that a conflict between the density improvement and the heat dissipation space is resolved, thereby improving system access capacity.

It should be noted that, in the present disclosure, the terms "includes", "comprises" or any other variation thereof are intended to indicate a non-exclusive inclusion, so that a process, method, article or device, which includes a series of elements, does not only include those listed elements but also include other elements which are not explicitly listed, or the elements inherent in such process, method, article or device. If there are no more limitations, limiting an element by "including a..." does not exclude the existence of other identical elements in the process, method, article or device which includes the element.

The ordinal numbers of the above embodiments of the present disclosure are merely for description, and do not indicate a preferential order of the embodiments.

The embodiments of the present disclosure are described above with reference to the drawings, but the present disclosure is not limited to the above implementations which are merely for illustration rather than for limitation. Enlightened by the present disclosure, those of ordinary skill in the art can make many variations without departing from the spirit of the present disclosure and the protection scope of the claims, and those variations should be considered to fall within the protection scope of the present disclosure.

## Claims

1. An optical module communication assembly, comprising a circuit board, wherein each of two opposite surfaces of the circuit board is provided with an optical module, and each optical module is provided with a first heat dissipation member.

2. The optical module communication assembly of claim 1, wherein each first heat dissipation member is fixed to a corresponding optical module by an elastic connection member.

3. The optical module communication assembly of claim 1 or 2, wherein each of the two opposite surfaces of the circuit board comprises a first circuit board area and a second circuit board area; a thickness of the circuit board in the first circuit board area is greater than that of the circuit board in the second circuit board area; and all the optical modules are located in the first circuit board area.

4. The optical module communication assembly of claim 3, wherein the first circuit board area of the circuit board is provided therein with a second heat dissipation member in contact connection with the optical modules.

5. The optical module communication assembly of claim 4, wherein the second heat dissipation member comprises a soaking plate disposed at a position corresponding to the first circuit board area and in contact connection with setting areas of the optical modules.

6. The optical module communication assembly of claim 5, wherein the soaking plate is disposed outside an end of the circuit board close to the first circuit board area, is located between the optical modules disposed on the two opposite surfaces of the circuit board, and is in contact connection with the optical modules disposed on the two opposite surfaces of the circuit board.

7. The optical module communication assembly of claim 5, wherein guide rails of the optical modules are connected with the circuit board and the soaking plate by press fit.

8. The optical module communication assembly of claim 5 or 6, wherein a heat conducting medium is disposed between two contact connection surfaces of the soaking plate and the optical modules, respectively.

9. The optical module communication assembly of claim 4, wherein a thickness of the second heat dissipation member is smaller than or equal to the thickness of the circuit board in the first circuit board area.

10. The optical module communication assembly of claim 2, wherein the elastic connection member comprises an elastic reed.

11. The optical module communication assembly of claim 1, further comprising a panel disposed along a direction perpendicular to the two opposite surfaces of the circuit board; and
the panel is separately connected with a guide rail of each optical module.

12. The optical module communication assembly of claim 3, further comprising a communication chip and a control chip, wherein the communication chip is disposed on one of the two opposite surfaces of the circuit board and is located in the second circuit board area; the control chip is disposed on one of the two opposite surfaces of the circuit board and is located in the second circuit board area; and
each of the communication chip and the control chip is provided with a third heat dissipation member.

13. The optical module communication assembly of claim 12, wherein a wind resistance balancing plate is disposed in the second circuit board area of the circuit board.
